Europäisches Patentamt

European Patent Office

Office européen des brevets

(19)

(11) Veröffentlichungsnummer: **0 179 194 B2**

(12) # NEUE EUROPÄISCHE PATENTSCHRIFT

(45) Veröffentlichungstag der neuen Patentschrift:
04.12.91 Patentblatt 91/49

(51) Int. Cl.⁵: **B60T 8/00**, H02H 3/20,
H02H 9/04

(21) Anmeldenummer: 85107036.7

(22) Anmeldetag: 07.06.85

(54) **Einrichtung zum Schutz einer Blockierschutzelektonik gegen Überspannung.**

(30) Priorität: 25.09.84 DE 3435055

(43) Veröffentlichungstag der Anmeldung:
30.04.86 Patentblatt 86/18

(45) Bekanntmachung des Hinweises auf die
Patenterteilung:
20.04.88 Patentblatt 88/16

(45) Bekanntmachung des Hinweises auf die
Entscheidung über den Einspruch:
04.12.91 Patentblatt 91/49

(84) Benannte Vertragsstaaten:
DE FR GB IT NL SE

(56) Entgegenhaltungen:
EP-A- 0 075 931
DE-A- 1 158 627
DE-A- 2 557 358
DE-A- 2 638 178

(56) Entgegenhaltungen:
DE-A- 2 811 149
DE-A- 3 234 630
US-A- 3 238 388
US-A- 3 723 817
US-A- 3 921 666
U. Tietze und Ch. Schenk, Halbleiter-Schaltungstechnik, korrigierter Nachdruck der 3.
Auflage, Springer-Verlag, 1976, S. 300, S. 475

(73) Patentinhaber: WABCO Westinghouse
Fahrzeugbremsen GmbH
Am Lindener Hafen 21 Postfach 91 12 80
W-3000 Hannover 91 (DE)

(72) Erfinder: Ruhnau, Gerhard
Schneerener Strasse 53
W-3057 Neustadt 1 (DE)

(74) Vertreter: Schrödter, Manfred
WABCO Westinghouse Fahrzeugbremsen
GmbH Am Lindener Hafen 21 Postfach 91 12
80
W-3000 Hannover 91 (DE)

EP 0 179 194 B2

## Beschreibung

Die Erfindung bezieht sich auf eine Einrichtung zum Schutz einer Blockierschutz-Elektronik gegen Überspannung gemäß dem Oberbegriff des Patentanspruchs 1.

Durch bestimmte Störungen im Bordnetz eines Kraftfahrzeuges können Überspannungen erzeugt werden. Derartige Überspannungen können im ungünstigsten Fall die im Fahrzeug eingebauten Elektroniken, insbesondere auch eine Blockierschutzelektronik, zerstören.

Besonders gefährlich ist eine durch einen sogenannten "Load Dump" erzeugte Überspannung. Der Load Dump entsteht dann, wenn der Generator bzw. die Lichtmaschine die Batterie mit einem relativ hohen Ladestrom lädt, und diese dann durch Betätigung des Batterie- Hauptschalters oder durch einen Kontaktfehler herausgeschaltet wird. In der Praxis ist das der Fall, wenn bei einem Fahrzeug mit entladener Batterie kurz nach einem Anlaßvorgang der Hauptschalter betätigt wird. Durch den Lastabwurf entlädt sich die im Generator gespeicherte magnetische Energie ins Bordnetz. Hierdurch kann in einem üblichen 24 Volt-Bordnetz im ungünstigen Fall eine rampenförmige Spannung mit einem Scheitelwert von bis zu 190 V und einer Dauer von ca. 500 ms entstehen.

Auf die durch den Load Dump verursachte spannungsmäßige Belastung sind normalerweise die im Fahrzeug enthaltenen Elektroniken, insbesondere solche mit relativ leistungsstarker Endstufe, nicht eingerichtet.

Es ist bereits bekannt, den Generator mit einem elektronischen Feldregler mit integriertem Überspannungsschutz zu verbinden ( Technische Unterrichtung Generatoren, BOSCH, 1.Ausgabe, 21. Mai 1974). Der Überspannungsschutz besteht hier im wesentlichen aus einem Thyristor, mit dem die Erregerwicklung des Generators im Fehlerfall kurzgeschlossen werden kann.

Das Vorhandensein eines solchen speziellen Feldreglers mit Überspannungsschutz kann aber im allgemeinen nicht vorausgesetzt werden.

Es ist weiter aus der EP-A-0 075 931 ein Anti-Skid-Regelsystem mit einer Warneinrichtung bekannt, die dann aktiviert wird, wenn eine stabilisierte Versorgungsspannung für die Elektronik zu sehr vom Normalwert abweicht. Es wird in diesem Fall eine Warnlampe angesteuert und der Blockierschutz abgeschaltet. Die bekannte Schaltung enthält auch eine Prüfschaltung zum Erkennen unzulässiger Spannungsschwankungen.

Schließlich ist aus der DE-A-26 38 178 eine gattungsgemäße Schutzvorrichtung für integrierte Schaltungen gegen Überspannungen bekannt, bei welcher der Endstufentransistor leitend gesteuert wird, sobald eine Überspannung so groß wird, daß eine Grenzspannung einer Spannungsbegrenzungsvorrichtung überschritten wird. Als Spannungsbegrenzungsvorrichtung ist dabei eine Zenerdiode vorgesehen. Hierdurch soll der Endstufentransistor bzw. die integrierte Schaltung gegen Überspannungen auf der Versorgungsleitung sicher geschützt werden.

Es hat sich gezeigt, daß beim Wiedereinschalten des Leistungstransistors, welches auf dem flachen Teil der Load Dump-Kurve erfolgt, dieser insbesondere bei mehreren kurz hintereinander auftretenden Load Dump Vorgängen noch zu stark belastet wird.

Der Erfindung liegt die Aufgabe zugrunde, eine Einrichtung der obengenannten Art an zugeben, durch die insbesondere der Leistungstransistor einer Blockierschutz-Elektronik gegen zerstörende Überspannungen, wie sie besonders beim Load Dump entstehen, geschützt wird.

Diese Aufgabe wird durch die im Patentanspruch 1 enthaltene Erfindung gelöst. Der Unteranspruch zeigt zweckmäßige Weiterbildungen der Erfindung.

Die Erfindung wird im folgenden anhand einer Zeichnung näher erläutert. Diese zeigt in

Fig. 1 ein Diagramm der beim Load Dump entstehenden Stossspannung über der Zeit und in

Fig. 2 ein Schaltbild der erfindungsgemässen Überspannung-Schutzschaltung.

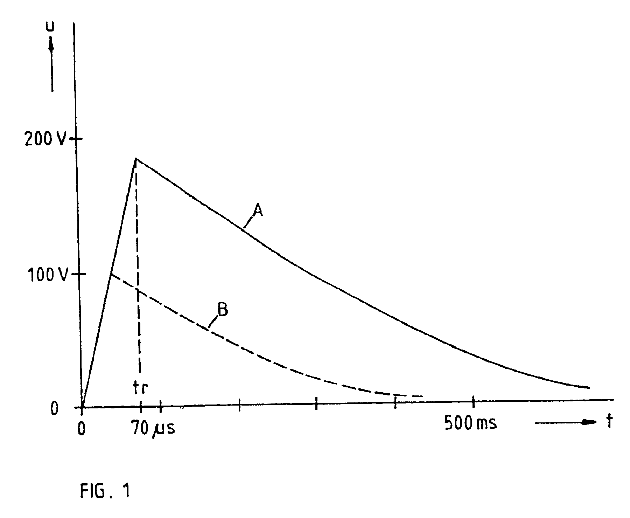

Wie aus dem in der Fig. 1 dargestellten Diagramm ersichtlich ist, erreicht ein typischer Load-Dump-Impuls im ungünstigsten Fall (ungedämpft) eine Scheitelspannung von etwa 190 V und eine Dauer von über 500 ms (Kurve A). Die Anstiegszeit $t_r$ beträgt etwa 70 µs.

Da im Bordnetz eines Kraftfahrzeuges ständig eine Grundlast vorausgesetzt werden kann, wird der Load Dump-Impuls schon hierdurch bedämpft. Eine weitere, wirksame Bedämpfung erfolgt, wie unten näher erläutert, durch die Anwendung der Erfindung. Die Spitzenspannung dieses bedämpften Impulses beträgt dann noch etwa 100 V (Kurve B).

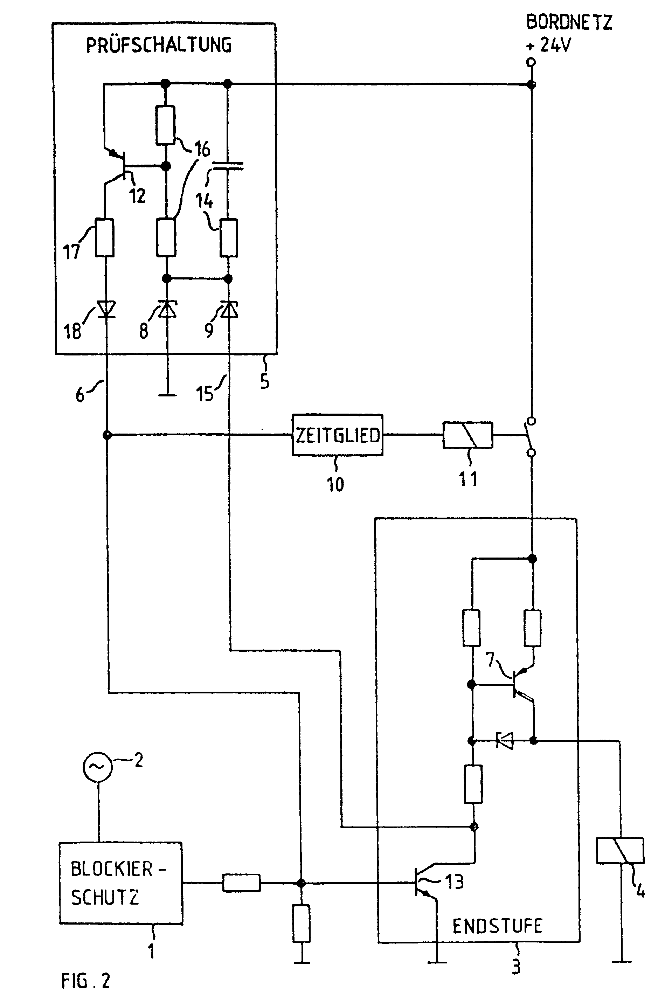

In Fig. 2 ist mit 1 und 3 eine Blockierschutz-Elektronik mit Endstufe bezeichnet. Diese erhält Signale über das Drehverhalten des zu regelnden Fahrzeugrades von einem Drehzahlgenerator 2. Der Ausgang der Elektronik 1 ist an die Leistungs-Endstufe 3 angeschlossen. Durch die Endstufe 3 wird ein Magnetventil 4 angesteuert, durch welches die Bremskraft des zu regelnden Rades derart beeinflusst wird, dass ein Blockieren des Rades verhindert wird.

Die genaue Schaltung der Blockierschutz-Elektronik sowie der Endstufe gehört nicht zur Erfindung und wird deshalb nicht näher erläutert.

Die Endstufe 3 der Blockierschutz-Elektronik 1 ist über ein Ventilrelais 11 an das Bordnetz des Fahrzeuges (+ 24 V) angeschlossen. Um den im Bordnetz im Störungsfall auftretenden Load Dump-Impuls zu dämpfen, wird die Höhe der Bordnetzspannung zunächst von einer Prüfschaltung 5 (Überspannungs-Erkennung) überwacht.

Sobald die Spannung einen Betrag von etwa 40 V überschreitet (erste Spannungsschwelle), wird eine erste Zenerdiode 8 leitend. Hierdurch wird das Basispotential eines Transistors 12 gegenüber dem Emitterpotential vermindert, wodurch der Transistor 12 durchschaltet. Der Transistor 12 ist mit dem Emitter an das Bordnetz geschaltet. Seine Basis liegt an einem Spannungsteiler 16. Der Kollektor ist über einen Widerstand 17 und eine Diode 18 an eine Leitung 6 angeschlossen. Über die Leitung 6 wird ein in der Endstufe 3 enthaltener Eingangstransistor 13 sowie ein Leistungstransistor 7 durchgesteuert. Das Durchsteuern der Transistoren erfolgt schlagartig, um ein längeres Durchfahren des Analogbereiches zu vermeiden.

Im durchgeschalteten Zustand der Transistoren 13 und 7 wird der Load Dump-Impuls durch den relativ niedrigen Widerstand des Magnetventils 4 wirksam bedämpft. Der dabei auftretende Stromstoss ist für den Leistungstransistor 7 ungefährlich.

Bei einer vierkanaligen Blockierschutzanlage (nicht dargestellt) sind vier Magnetventile 4 vorhanden. Da jedes Magnetventil ein Einlass- und ein Auslassventil mit gesonderten Wicklungen enthält, sind insgesamt acht Wicklungen vorhanden, die beim Load Dump in der beschriebenen Weise parallel an das Bordnetz geschaltet werden. Hierdurch ergibt sich bei einem Widerstand einer Wicklung von etwa 14 Ohm ein Gesamtwiderstand von 3,5 Ohm. Zusammen mit der ausserdem am Bordnetz liegenden Grundlast ergibt sich eine Belastung des Generators, die etwa seinem Innenwiderstand entspricht. Damit wird die Spannung des unbelasteten Impulses auf etwa die Hälfte geteilt (vergleiche Fig. 1).

Wenn der wieder absinkende Load Dump-Impuls die Durchbruchspannung der ersten Zenerdiode 8 unterschritten hat, bleibt die Durchschaltung der Endstufe 3 trotzdem aufrechterhalten, da eine zweite Zenerdiode 9 mit einer Durchbruchspannung von etwa 36 V (zweite Spannungsschwelle) noch leitend bleibt. Diese Zenerdiode 9 ist über eine Leitung 15 an den Kollektor des Transistors 13 angeschlossen und hält diesen geöffnet. Erst wenn auch die Durchbruchspannung der zweiten Zenerdiode 9 unterschritten ist, wird die Endstufe 3 wieder in den gesperrten Zustand zurückgeschaltet.

Durch die Zenerdioden 8 und 9 wird also eine Hysterese im Schaltverhalten erzeugt. Das Zurückschalten bei einem niedrigeren Spannungsniveau dient zum Schutz des Leistungstransistors 7 beim Durchfahren des analogen Bereiches.

Ein weiter in der Prüfschaltung 5 enthaltenes RC-Glied 14 dient zur Dämpfung von Einschingvorgängen, ist aber nicht unbedingt notwendig.

Selbstverständlich kann die Prüfschaltung 5 auch in abgewandelter Form, z.B. mit integrierten Spannungskomparatoren, aufgebaut werden (nicht dargestellt).

Der im durchgeschalteten Zustand durch den Leistungstransistor 7 fliessende Stossstrom ist bei einem einmaligen Load Dump-Impuls für den Transistor ungefährlich. Wenn jedoch, z.B. infolge eines Kontaktfehlers, ständig hintereinander Impulse auftreten würden, könnte der Transistor 7 unzulässig erhitzt und damit zerstört werden. Um diesen Fall auszuschliessen, ist in einer Weiterbildung der Erfindung ein Zeitglied 10 vorgesehen. Dieses erfasst die einzelnen Load Dump-Vorgänge und schaltet nach einer vorbestimmten Anzahl das Ventilrelais 11 um, so dass die Endstufe 3 völlig vom Bordnetz getrennt ist.

## Patentansprüche

1. Einrichtung zum Schutz einer Blockierschutz-Elektronik mit Endstufen, die Leistungstransistoren enthalten, vor impulsförmigen Überspannungen im Bordnetz eines Kraftfahrzeuges, insbesondere vor einer durch "Load Dump" erzeugten kurzzeitigen Überspannung, wobei eine Prüfschaltung (5) zum Erkennen der Überspannung vorgesehen ist, und ein Ausgang (6) der Prüfschaltung (5) derart an die Endstufe (3) der Blockierschutzelektronik (1) angeschlossen ist, daß der zugehörige Leistungstransistor (7) beim Auftreten der Überspannung im Sinne eines Durchschaltens ansteuerbar ist, wobei die Prüfschaltung (5) eine erste Zenerdiode (8) enthält, welche bei Überschreitung einer ersten Spannungsschwelle durch die Überspannung leitend wird, dadurch gekennzeichnet, daß die Prüfschaltung (5) zum Erkennen des Wiederabsinkens der Überspannung unter eine zweite Spannungsschwelle eine zweite Zenerdiode (9) enthält, wobei die zweite Spannungsschwelle niedriger ist als die erste Spannungsschwelle, und daß die Prüfschaltung (5) bei Unterschreitung der zweiten Spannungsschwelle den Leistungstransistor (7) wieder sperrt, wobei die Anode der zweiten Zenerdiode (9) an den Kollektor eines Eingangstransistors (13) der Endstufe (3) angeschlossen ist.

2. Einrichtung nach Anspruch 1, dadurch gekennzeichnet, daß ein Zeitglied (10) vorgesehen ist, das die Dauer der Überspannung überwacht, und nach Überschreitung einer vorbestimmten Anzahl von Load-Dump-Vorgängen einen Schalter [Ventilrelais (11)] öffnet, über den die Endstufe (3) an ihre Stromversorgung angeschlossen ist.

## Claims

1. Device for protecting an electronic antilock system having final stages containing power transistors, against pulse-like overvoltages in the inboard electrical supply system of a motor vehicle, especially against an overvoltage of short duration produced by "load dump", a test circuit (5) being provided to detect the overvoltage, and an output (6) of the test circuit (5) being so connected to the final stage (3) of the electronic antilock system (1) that the corresponding power transistor (7), when the overvoltage occurs, can be triggered in the direction of becoming conductive, the test circuit (5) containing a first Zener diode (8) which becomes conductive when the overvoltage exceeds a first voltage threshold, characterised in that the test circuit (5) contains a second Zener diode (9) to detect when the overvoltage drops again below a second voltage threshold, the second voltage threshold being lower than the first voltage threshold, and that the test circuit (5) blocks the power transistor (7) again on deviation below the second voltage threshold, the anode of the second Zener diode (9) being connected to the collector of an input transistor (13) of the final stage (3).

2. Device according to Claim 1, characterised in that a timing element (10) is provided which monitors the duration of the overvoltage, and after a predetermined number of load dump operations has been exceeded opens a switch [relay (11)], by way of which the final stage (3) is connected to its current supply.

## Revendications

1. Dispositif de protection d'un circuit électronique de système antiblocage avec des étages finals comprenant les transistors de puissance contre des surtensions impulsionnelles dans le réseau de bord d'un véhicule, et en particulier contre une brève surtension produite par un délestage brusque, un circuit de test (5) étant prévu pour déceler la surtension ; et une sortie (6) du circuit de test (5) étant reliée à l'étage final (3) du circuit électronique du système de blocage (1) de façon à permettre la commande dans le sens du passage à l'état conducteur du transistor de puissance (7) correspondant lors de l'apparition de la surtension, le circuit de test (5) comprenant une première diode Zener (8), que la surtension fait passer dans l'état conducteur lors du dépassement d'un premier seuil de tension, caractérisé en ce que le circuit de test (5) comprend, pour la détection de la décroissance de la surtension au-dessous d'un second seuil de tension, une seconde diode Zener (9), le second seuil de tension étant inférieur au premier, et en ce que le circuit de test (5) bloque de nouveau le transistor de puissance (7) quand la tension d'impulsion tombe au-dessous du second seuil de tension, l'anode de la seconde diode Zener (9) étant reliée au collecteur d'un transistor d'entrée (13) de l'étage final (3).

2. Dispositif selon la revendication 1, caractérisé par un élément de retard (10) qui surveille la durée de la surtension et qui ouvre, après le dépassement d'un nombre prédéterminé de délestages brusques, un interrupteur (valve relais (11)) qui relie l'étage final (3) à son alimentation.

FIG. 1

PRÜFSCHALTUNG

BORDNETZ + 24V

ZEITGLIED

ENDSTUFE

BLOCKIER-SCHUTZ

FIG. 2